# EUROPEAN PATENT APPLICATION

(11) **EP 3 680 832 A1**
(43) Date of publication of application: **15.07.2020**
(21) Application number: 20151292.8
(22) Date of filing: 10.01.2020
(51) Int. Cl.: G06Q 10/04, G08G 5/00

(54) **SYSTEMS AND METHODS FOR CONNECTED AND INTELLIGENT FLIGHT MANAGEMENT SYSTEM**

(30) Priority: 11.01.2019 US 201916245589
(71) Applicant: Honeywell International Inc., Morris Plains, NJ 07950 (US)
(72) Inventor: SRINIVASAN, Narayanan, Morris Plains, NJ New Jersey 07950 (US); MOHAN, Rajeev, Morris Plains, NJ New Jersey 07950 (US); JANAKIRAMAN, Kirupakar, Morris Plains, NJ New Jersey 07950 (US); RAO, Nayyar Azam Khan, Morris Plains, NJ New Jersey 07950 (US); RAJENDRAN, Ramkumar, Morris Plains, NJ New Jersey 07950 (US)
(74) Representative: Haseltine Lake Kempner LLP

(57) **Abstract**

Disclosed are systems, methods, and non-transitory computer-readable medium for providing one or more flight management system (FMS) services as a Software as a Service (SaaS) with context-aware intelligence for a plurality of FMS users. For example, a system may include a context analyzer system configured to determine based on one or more context analysis parameters, a prediction engine configured to determine prediction data based on the one or more contexts and/or one or more prediction parameters, a recommender engine configured to determine recommendations based on one or more recommendation requests and/or one or more prediction data, a background processing system configured to identify background operations to support an operation of a first FMS service and generate background support data for the first FMS service, and a message bus in communication with an API gateway, the context analyzer system, the prediction engine, the recommender engine, and the background processing system.

## Description

### TECHNICAL FIELD

Various embodiments of the present disclosure generally relate to a connected service-oriented architecture of flight management system (FMS) services, and more particularly, to providing one or more FMS services as a Software as a Service (SaaS) with context-aware intelligence for a plurality of FMS users.

### BACKGROUND

A flight management system (FMS) is a fundamental component of a modern airliner's avionics. The primary functions of an FMS had been in-flight management of the flight plan. For example, an FMS may guide an aircraft along the flight plan using various sensors, such as global positioning systems or inertial navigation systems, to determine the aircraft's position. Other functions of an FMS may be retrieval and analysis of weather or airport data as they relate to a particular flight path. These features are functions and data which may be useful for various parties involved in flying a particular aircraft, such as pilots, airline staff, ground control, or air traffic control. However, because FMS software applications have been implemented in a monolithic, on-board architecture in cockpits, direct access to these functions were physically limited to only pilots in cockpits. The present disclosure is directed to overcoming one or more of these issues.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods are disclosed to provide one or more FMS services as a Software as a Service (SaaS) with context-aware intelligence for a plurality of FMS users.

In one embodiment, a computer-implemented system is disclosed for providing one or more FMS services as a SaaS with context-aware intelligence for a plurality of FMS users. The computer-implemented system may comprise: a context analyzer system configured to determine one or more contexts based on one or more context analysis parameters, wherein the one or more contexts comprise at least one of a flight context, an airport context, and a weather context; a prediction engine configured to determine prediction data based on the one or more contexts and/or one or more prediction parameters; a recommender engine configured to determine one or more recommendations associated with the one or more FMS services, based on one or more recommendation requests, the one or more contexts, and/or the prediction data; and a background processing system configured to identify one or more background operations to support an operation of a first FMS service and generate background support data for the first FMS service using the one or more background operations; and a message bus in communication with an API gateway, the context analyzer system, the recommender engine, the prediction engine, and the background processing system.

In accordance with another embodiment, a computer-implemented method is disclosed for providing one or more FMS services as a SaaS with context-aware intelligence for a plurality of FMS users. The computer-implemented method may comprise: determining, using a context analyzer system, one or more contexts based on one or more context analysis parameters, wherein the one or more contexts comprise at least one of a flight context, an airport context, and a weather context; determining, using a prediction engine, prediction data based on the one or more contexts and/or one or more prediction parameters; determining, using a recommender engine, one or more recommendations associated with the one or more FMS services, based on one or more recommendation requests, the one or more contexts, and/or the prediction data; and identifying, using a background processing system, one or more background operations to support an operation of a first FMS service and generate background support data for the first FMS service using the one or more background operations, wherein the context analyzer system, the prediction engine, the recommender engine, and the background processing system are interconnected by a message bus in communication with an API gateway.

In accordance with another embodiment, a non-transitory computer-readable medium is disclosed for providing one or more FMS services as a SaaS with context-aware intelligence for a plurality of FMS users. The non-transitory computer readable medium may comprise instructions for: determining, using a context analyzer system, one or more contexts based on one or more context analysis parameters, wherein the one or more contexts comprise at least one of a flight context, an airport context, and a weather context; determining, using a prediction engine, prediction data based on the one or more contexts and/or one or more prediction parameters; determining, using a recommender engine, one or more recommendations associated with the one or more FMS services, based on one or more recommendation requests, the one or more contexts, and/or the prediction data; and identifying, using a background processing system, one or more background operations to support an operation of a first FMS service and generate background support data for the first FMS service using the one or more background operations, wherein the context analyzer system, the prediction engine, the recommender engine, and the background processing system are interconnected by a message bus in communication with an API gateway.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an overview of an example environment in which systems, methods, and other aspects of the present disclosure may be implemented.
FIG. 2 depicts a block diagram schematically showing the connected FMS cloud services platform, according to one or more embodiments.
FIG. 3 depicts a flowchart of an exemplary method for providing one or more FMS services as a SaaS with context-aware intelligence for a plurality of FMS users, according to one or more embodiments.
FIG. 4 depicts a communication diagram of example use cases in which the servicing modules are used to predict FMS services, recommend flight plans based on predictions, and recommend cost index calculations based on predictions, according to one or more embodiments.
FIG. 5 depicts an exemplary computer device or system, in which embodiments of the present disclosure, or portions thereof, may be implemented.

### DETAILED DESCRIPTION OF EMBODIMENTS

As described above, flight management system ("FMS") software applications have traditionally been implemented in a monolithic, on-board architecture in cockpits, in which direct access to these functions were physically limited only to pilots in cockpits. Thus, a need exists to implement FMS software applications in a connected, intelligent, and service-oriented architecture, in such a way that all parties involved in flying an aircraft and/or managing an aircraft's flight plans, such as pilots, dispatchers, ground control, or air traffic control, may access the desired FMS services in an efficient, portable, and dynamic manner.

Accordingly, the following embodiments describe systems and methods for providing one or more FMS services as a software-as-a-service ("SaaS") environment with context-aware intelligence for a plurality of FMS users. According to aspects of the present disclosure, FMS services may be provided dynamically in a connected, service-oriented architecture, such as a SaaS environment. A SaaS environment, in accordance with the present disclosure, may be a software licensing and delivery model in which software applications, such as FMS microservices, are licensed and provided to users on a subscription basis and are centrally hosted. As described in further detail below, providing FMS microservices as SaaS applications in accordance with the present disclosure may result in improvement in the FMS technology in various aspects, by allowing a variety of users to access the FMS services using a shared platform, enabling users to access this shared platform using a variety of devices including thin and portable clients, enhancing reliability and ease of access by centrally hosting data and applications, and reducing latencies by efficiently utilizing prediction engine and background processing system to support upcoming FMS services with context-aware intelligence.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The term "or" is meant to be inclusive and means either, any, several, or all of the listed items. The terms "comprises," "comprising," "includes," "including," or other variations thereof, are intended to cover a non-exclusive inclusion such that a process, method, or product that comprises a list of elements does not necessarily include only those elements, but may include other elements not expressly listed or inherent to such a process, method, article, or apparatus. Relative terms, such as, "substantially" and "generally," are used to indicate a possible variation of ± 10% of a stated or understood value.

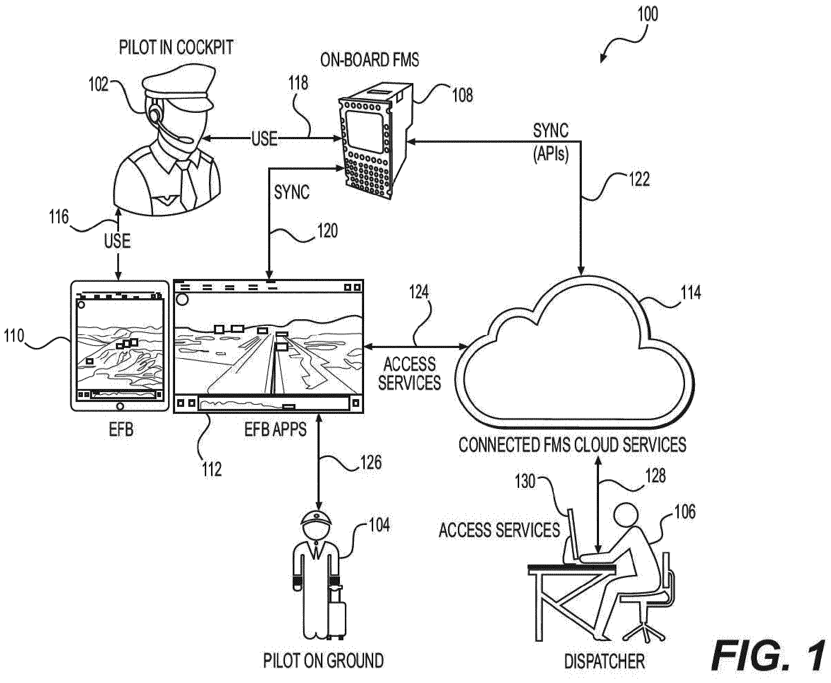

Referring now to the appended drawings, FIG. 1 shows an overview of an example environment 100, according to one or more embodiments of the present disclosure. The environment 100 may, for example, include an EFB (electronic flight bag) 110, an on-board FMS 108, a connected FMS cloud services platform 114, and a dispatcher device 130. An EFB 110 may be a computer device carried by a pilot or a flight crew, which may store, for example, navigational charts, maps for air and ground operations of an aircraft, a flight plan management system, an aircraft operating manual, flight-crew operating manual, software applications which automate flight-related or avionics-related computation tasks, and/or any application or data which may be installed in a general purpose computing platform. On-board FMS 108 may be any specialized computer system physically installed in an aircraft (e.g., the cockpit), and may be programmed and/or customized to service the flight crew of the aircraft with in-flight tasks. A dispatcher device 130 may be any computer device which may be accessed by a user who performs planning, flying, navigating, or managing tasks associated with aircrafts, airspaces, airports, or flight plans. Accordingly, the user is not limited to a dispatcher, and the dispatcher device 130 is not limited to a device of a dispatcher. The connected FMS cloud services platform 114 may be a cloud-based platform that provides FMS services to any user who has authorized access to the platform, as described in further detail below.

As shown in FIG. 1, the environment 100 may accommodate access by various types of users. For example, a pilot in cockpit 102 may have access to the EFB 110, EFB applications 112 installed in an EFB 110, and/or the on-board FMS 108 for accessing the connected FMS cloud services platform 114. Because of the fundamental avionic functions continually provided by the on-board FMS 108 during a flight, a pilot in cockpit 102 may use on-board FMS 108 as the sole or primary avionic system for performing in-flight tasks and operations 118. Additionally, the pilot in cockpit 102 may also use the EFB 110 within the cockpit (e.g., on a tablet or any other portable computing device), as a back-up FMS access device and/or a supplemental avionic device. The EFB applications 114 may access the connected FMS cloud service platform 114, and provide the FMS services to the users of the EFB 110 in which the EFB applications 114 are installed. In that way, the EFB 110 may provide user-friendly and customized user interfaces, by which FMS services from the platform 114 may be serviced, for example, to the pilot in cockpit 102.

The on-board FMS 108 may also be configured to synchronize data 122 with connected FMS cloud services platform 114, using, for example, an application programming interface (API). In addition, the on-board FMS 108 may also be configured to synchronize data 120 with EFB applications 112. Thus, in some implementations, the on-board FMS 108 may be synchronized with data from both EFB 110 and the platform 114 in real-time or at predetermined intervals, in such a way that the pilot in cockpit 102 may rely on the on-board FMS 108 for all tasks arising in the environment 100.

A pilot on ground 104 may also access the EFB 110 and the EFB applications 112. In some implementations, the pilot on ground 104 and the pilot on cockpit 102 may be the same pilot, yet under different circumstances (e.g., time and location of the access). Additionally, or alternatively, the pilot on ground 104 may be a different pilot, or another authorized member of the flight crew, who accesses EFB 110 on the ground for an official duty related to the connected FMS cloud services 114. While the pilot on ground 104 is accessing the EFB applications 112 via EFB 110, the EFB applications 114 may access the connected FMS cloud service platform 114, and receive various FMS services from it. In that way, the EFB 110 may provide user-friendly and customized user interfaces, by which FMS services 126 from the connected FMS cloud service platform 114 may be serviced to the pilot on ground 104.

A dispatcher 106 may also access the connected FMS cloud services platform 114, through a dispatcher device 130. A dispatcher, in accordance with the present disclosure, may be any authorized personnel performing duties related to dispatching of aircrafts in the environment 100. For example, a dispatcher may be an airline staff, an airport staff, air traffic control personnel, a ground control personnel, a member of a relevant aviation authority, or any other authorized person who may benefit from FMS services from the connected FMS cloud services platform 114 in performing his/her duties. A dispatcher device 130 may be any computing device capable of establishing a connection 128 to the cloud and interfacing with the connected FMS cloud services platform 114. While a dispatcher 106 is accessing the FMS services via the dispatcher device 130, the dispatcher device 130 may access the connected FMS cloud service platform 114, and receive various FMS services from it. In that way, the dispatcher device 130 may provide user-friendly and customized user interfaces, by which FMS services 126 from the connected FMS cloud service platform 114 may be serviced to the dispatcher 106.

The on-board FMS 108, the EFB 110 and the dispatcher device 130 may include one or more devices capable of receiving, generating, storing, processing, and/or providing information associated with FMS services. For example, the on-board FMS 108, the EFB 110 or the dispatcher device 130 may include a communication and/or computing device, such as a mobile phone (e.g., a smart phone, a radiotelephone, etc.), a computer (e.g., a desktop computer, a laptop computer, a tablet computer, a handheld computer), a gaming device, a wearable communication device (e.g., a smart wristwatch, a pair of smart eyeglasses, etc.), or a similar type of device.

As indicated above, FIG. 1 is provided merely as an example. Other examples are possible and may differ from what was described with regard to FIG. 1. The number and arrangement of devices and networks shown in FIG. 1 are provided as an example. In practice, there may be additional devices, fewer devices and/or networks, different devices and/or networks, or differently arranged devices and/or networks than those shown in FIG. 1. Furthermore, two or more devices shown in FIG. 1 (e.g., EFB 110 and dispatcher device 130) may be implemented within a single device, or a single device shown in FIG. 1 (e.g., EFB 110, on-board FMS 108, or dispatcher device 130) may be implemented as multiple, distributed devices. Additionally, or alternatively, a set of devices (e.g., one or more devices) of environment 100 may perform one or more functions described as being performed by another set of devices of environment 100.

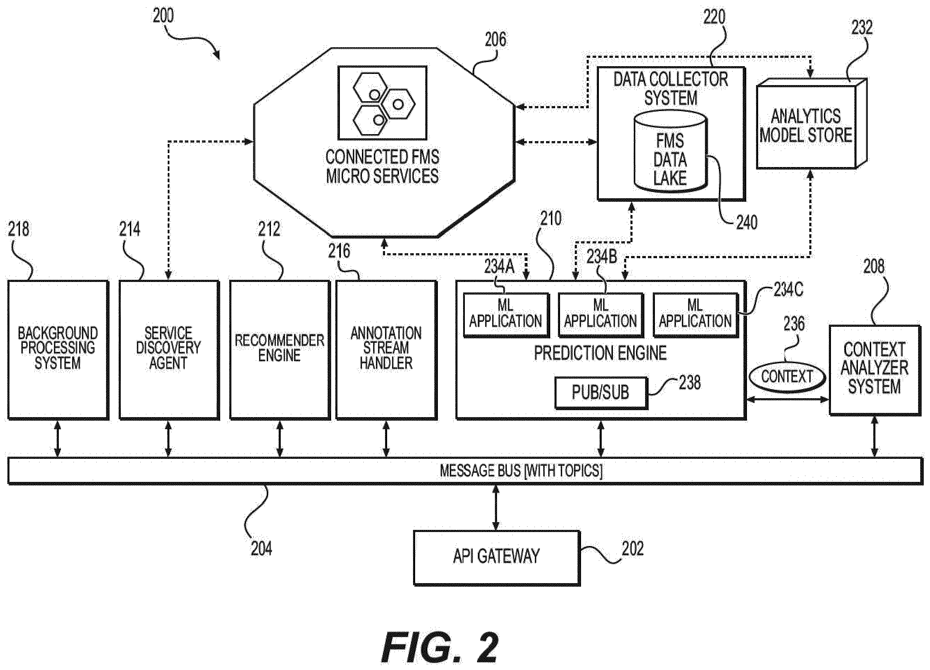

FIG. 2 depicts a block diagram schematically showing an example environment 200 in the connected FMS cloud services platform 114, according to one or more embodiments. As shown in FIG. 2, environment 200 may include an API (application programming interface) gateway 202, a message bus 204, servicing modules 208-220, and connected FMS microservices 206. In some implementations, the environment 200 may correspond to the connected FMS cloud services platform 114, with the API gateway 202 allowing the communications 122, 124, and 128 depicted in FIG. 1. Components, devices, and modules of environment 200 may interconnect via wired connections, wireless connections, or a combination of wired and wireless connections.

An API gateway 202 may be a component which may serve as a point of entry for a group of microservices, such as the connected FMS microservices 206. Depending upon various use cases, the API gateway 202 may be configured to accommodate requests or communications (e.g., requests from on-board FMS 108, EFB applications 112, or dispatcher device 130), invoke multiple back-end services (e.g., services by connected FMS microservices 206) and aggregate and/or coordinate the results. The API gateway 202 may be in communication with the message bus 204, in order to communicate with the various back-end services. In addition, the API gateway 202 may be, for example, configured to be updated each time a new microservice is added or removed in the connected FMS microservices 206. The API gateway 202 may be implemented as hardware, software, and/or a combination of hardware and software.

A message bus 204 may be a connecting middleware between servicing modules 202-220, which enable the servicing modules 202-220 to interconnect and communicate amongst each other using messaging. The message bus 204 may include a messaging infrastructure, where each servicing module, for example, may provide data and allow other servicing modules to use them according to the modules' specific use cases. The message bus 204 may support, for example, single request/reply communications, group request/reply communications, and broadcast functions. In some implementations, servicing modules may provide data onto the message bus without mandating how the data are to be used, thereby resulting in free flow of data which allows various servicing modules to non-destructively consume and/or utilize those messages. The API gateway 202 may be implemented as hardware, software, and/or a combination of hardware and software.

Connected FMS microservices 206 may be FMS services organized as a collection of specialized modular services. In some implementations, the connected FMS microservices 206 may be software applications stored, at least in part, in one or more servers remote from on-board FMS 108, EFB 110, and dispatcher device 130, for cloud-based access from at least one of these devices. The connected FMS microservices 206 may be modular services which are developed, deployed and scaled independently of each other, messaging-enabled to communicate with various components within the environment 200, and organized around capabilities. The connected FMS microservices 206 may include, for example, flight planning services, in-flight navigation services, airport specific services, ground communication services, weather services, services for computing fuel scenarios, services for computing optimization scenarios, services for offsetting deviations, and services for computing approach procedures. The connected FMS microservices 206 may be implemented as hardware, software, and/or a combination of hardware and software.

A context analyzer system 208 may be a servicing module included in the environment 200. The context analyzer system 208 may receive one or more context analysis parameters, use the parameters to determine contexts, and provide one or more contexts to the message bus and/or the prediction engine 210. Subsequently, the one or more determined contexts may be used at any other component connected to the context analyzer system 208 in the environment 200. The one or more contexts may be, for example, a flight context, an airport context, or a weather context, and the contexts may be determined from communicating with a cockpit, a ground system, an airport database system, and/or connected weather services. By determining contexts, the accuracy and efficiency of services provided by the environment 200 may be enhanced by adding intelligence to the ways that the services deliver results. For example, determining pending flight information and airport status information as contextual data may enable the prediction engine 210 to more accurately and dynamically predict which flight plan requests would be received in the next few hours. The contextual data provided by the context analyzer system 208 may be used for various use cases in the environment 200, as described in further detail below. The context analyzer system 208 may be implemented as hardware, software, and/or a combination of hardware and software.

A prediction engine 210 may be another servicing module included in the environment 200. The prediction engine may be in connection with the message bus, as well as with the connected FMS microservices 206, FMS data lake 240, analytics model store 232, and/or the context analyzer system 208. The prediction engine 210 may predict FMS services which are required for specific contexts, or predict data which may be necessary for an FMS service(s) or an operation of another servicing module(s). Predictions provided by the prediction engine 210 may be used for various use cases in the environment 200, as described in further detail below. The prediction engine 210 may be implemented as hardware, software, and/or a combination of hardware and software.

The prediction engine 210 may include machine learning applications 234A-234C. While three machine learning applications (234A, 234B, and 234C) are depicted by way of example, the prediction engine 210 may be configured to include any number of one or more machine learning applications based on predetermined preferences. In some implementations, output(s) from one or more of the included machine learning applications may become input(s) for different one or more of the machine learning applications to arrive at inference or prediction results. Additionally, one or more of the included machine learning applications may, for example, have streaming analytics capability along with down sampling of data. The prediction engine 210 may, for example, use the machine learning applications 234A-234C trained on a training set (e.g., FMS microservices that have been called under certain contexts) in order to analyze the FMS microservices being correlated with certain contexts, generate a score for contexts representing a similarity to a given context, and select one or more FMS microservices associated with contexts over a threshold score. In some implementations, the prediction engine 210 may analyze prior predictions, to the extent obtainable from environment 200 and/or other environments, to train the machine learning applications 234A-234C (e.g., using one or more big data techniques) and determine predictions of FMS services which are required for specific contexts, or data predicted to be necessary.

An analytical model store 232 may be a repository that may store pre-built machine learning models, each with its respective model index. The repository may be, for example, a centralized, cloud-based data repository. A model index may include, for example, information related to the purpose of the model, training data set, and the accuracy of the machine learning model. The prediction engine 210 may utilize one or more models from the analytical model store 232 based upon runtime needs. In addition, the prediction engine may include PUB/SUB component 238, which may be publisher/subscriber component that may operate on the message bus 204. In some implementations, the prediction engine 210 may use PUB/SUB 238 component to receive notifications from the message bus 204 by subscribing to certain event topics, and/or publish messages onto the message bus 204 to notify other peer applications.

A recommender engine 212 may be another servicing module included in the environment 200. The recommender engine 212 may be configured to determine one or more recommendations associated with the one or more FMS services, based on one or more recommendation requests, the one or more contexts, and/or the prediction data. The recommendation requests may be received from on-board FMS 108, EFB applications 112, or dispatcher device 130. Additionally, or alternatively, the recommendation requests may be received from any other servicing modules in the environment 200 or any of the connected microservices 206. The determined recommendations may be, for example, different flight plans based on conditions relating to weather, traffic, and/or terrain, or one or more aircraft performance options (e.g., cost index calculations for an aircraft) based on one or more predicted scenarios (e.g., data predicted at the prediction engine 210). The recommender engine 212 may be implemented as hardware, software, and/or a combination of hardware and software.

A background processing system 218 may be a servicing module included in the environment 200. In some implementations, a service discovery agent 214 and annotation stream handler 216 may be modules controlled by the background processing system 218, and/or sub-modules included in the background processing system 218. For example, a service discovery agent 214 may identity the most appropriate available microservice which may be dynamically required for the avionics application needs, and bind an application connection request to the identified microservice. An annotation stream handler 216 may, for example, help the connected FMS cloud services modules 208-220 and the FMS microservices 206 to refine the telemetry data from IoT (Internet of Things) cloud communication channel(s). In implementations where the service discovery agent 214 and the annotation stream handler 216 are included in the background processing system 218, the modules service discovery agent 214, annotation stream handler 216, and background processing system 218 may be collectively referred to as the background processing system 218. In some other implementations, the service discovery agent 214 and annotation stream handler 216 may be in communication with the background processing system 218, as separate modules in the environment 200. The service discovery agent 214 may discover one or more service(s) (e.g., FMS microservices) to identify, for example, the discovered one or more service(s) as a scheduled service(s) that the background processing system 218 to prepare background support data for. The annotation stream handler 216 may, for example, create and manage annotations of data streams which are received and/or produced by the background processing system 218. For example, to coordinate delivery of large volume of data (e.g., background support data being delivered to data collector system 220), the annotation stream handler 216 may provide semantic annotation of streaming data to support dynamic integration of the prepared data into the predicted FMS microservice(s).

The background processing system 218 may be configured to identify one or more background operations to support an operation of a first FMS service, and generate background support data for the first FMS service using the one or more background operations. The first FMS service may be, for example, a FMS microservice, among the connected FMS microservices 206, which is predicted by the prediction engine 210 as the FMS microservice that may be required to run at a certain time based on a given context. As another example, the first FMS service may be a set of one or more microservices, which may be scheduled to run in a particular time frame in the future. Once the first FMS service is identified, the background processing system 218 may identify one or more background operations to generate support data for the first FMS service. The background operations may be one or more FMS microservices from the connected FMS microservices 206, one or more software services from a source other than the connected FMS microservices 206, or a combination thereof. The background processing system 218 may execute the background operations to prepare data for the first FMS service. Such background operations may be selected and executed under various use cases in the environment 200, as described in further detail below. The background processing system 218 may be implemented as hardware, software, and/or a combination of hardware and software.

A data collector system 220 may be a servicing module included in the environment 200. In some implementations, a data collector system 220 may include and/or control databases such as FMS data lake 240, as shown in FIG. 2. In some other implementations, a data collector system 220 may include and/or control one or more databases, without including and/or controlling the FMS data lake 240. In implementations where FMS data lake 240 is not included in the data collector system 220, the FMS data lake may be a separate database which is in communication with at least one of the message bus 204, a module among service modules 208-220, and the connected FMS microservices 206.

The data collector system 220 may receive or generate data associated with one or more of the servicing modules (e.g., the context analyzer system 208, the recommender engine 212, the prediction engine 210, the background processing system 218, and the data collector system 220). The data collector system 220 may also store the usable data in a data repository (e.g., FMS data lake 240 or another database) for later use or retrieval by at least one of the servicing modules. In some implementations, the data collector system 220 may provide data repository (e.g., FMS data lake 240 or another database) where all raw data in their native format until the data are needed. In this way, the data may be stored in a flat architecture, with each data element tagged with a set of metadata. The data collector system 220 may be used for various use cases in the environment 200, as described in further detail below. The data collector system 220 may be implemented as hardware, software, and/or a combination of hardware and software.

The number and arrangement of modules, devices, and networks shown in FIG. 2 are provided as an example. In practice, there may be additional modules and devices, fewer modules, devices and/or networks, different modules, devices and/or networks, or differently arranged modules, devices and/or networks than those shown in FIG. 2. Furthermore, two or more devices included in environment 200 of FIG. 2 may be implemented within a single device, or a single device in the environment 200 of FIGS. 2 may be implemented as multiple, distributed devices. Additionally, or alternatively, a set of devices (e.g., one or more devices) of environment 200 may perform one or more functions described as being performed by another set of devices of environment 200. Each servicing module (e.g., the context analyzer system 208, the recommender engine 212, the prediction engine 210, the background processing system 218, and the data collector system 220) may perform its functions using one or more computer processors, and in some implementations, each servicing module may comprise the one or more computer processors as a component therein.

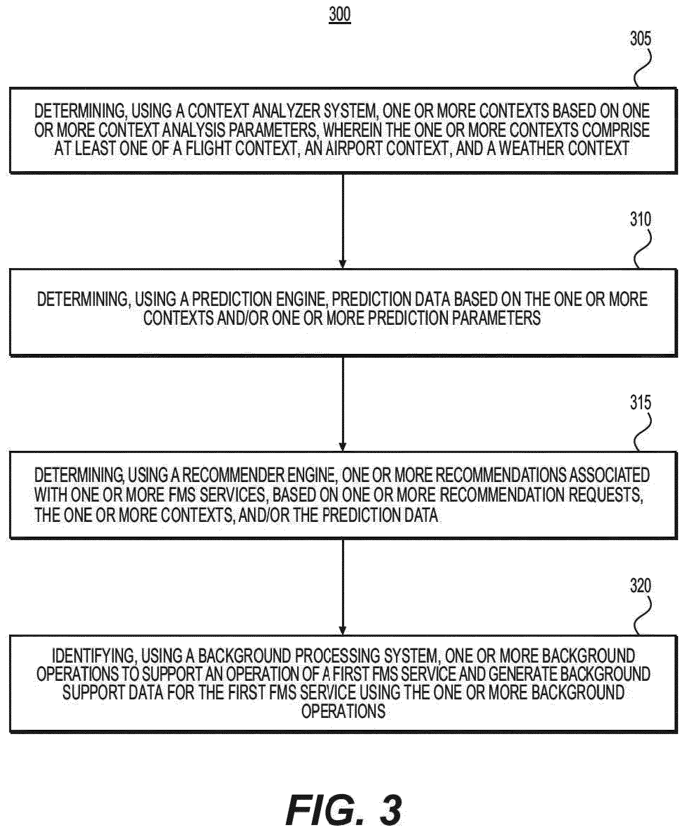

FIG. 3 depicts a flowchart of an exemplary method 300 for providing one or more FMS services as a SaaS with context-aware intelligence for a plurality of FMS users, according to one or more embodiments.

First, the exemplary method 300 may begin with determining, using the context analyzer system 208, one or more contexts based on one or more context analysis parameters, wherein the one or more contexts comprise at least one of a flight context, an airport context, and a weather context (Step 305). The one or more context parameters may be obtained by communicating with at least one of a cockpit of an aircraft, a ground system, an airport database system, and connected weather services. The one or more context parameters may be, for example, flight parameters from a cockpit, airport parameters from ground systems or airport database systems, and/or weather parameters from connected weather services. In some implementations, multiple types of parameters may be received from a single source, and a single type of parameters may also be received from multiple sources.

In response to obtaining the one or more context parameters, one or more contexts may be determined using the context analyzer system 208. In some implementations, the one or more context parameters may serve as the one or more contexts without any modification made to the underlying data. Additionally, or alternatively, the context analyzer system 208 may derive the one or more contexts from the one or more context parameters. For example, the context analyzer system 208 may apply a filter to the one or more context parameters and retrieve only data pertaining to one or more predetermined criteria. For example, airport contexts pertaining only to predetermined criteria (e.g., flight times and flight status information) may be arrived from received airport parameters (e.g., flight times, flight status, terminal status, airport weather data, etc.). Additionally, or alternatively, the context analyzer system 208 may perform analysis and/or computations based on one or more context parameters to arrive at the one or more contexts. For example, the context analyzer system 208 may perform unit conversions, ranking of the received data, optimization based on existing algorithms conditionally applied to the received data, etc. to arrive at the one or more contexts.

The exemplary method 300 of FIG. 3 may also comprise determining, using the prediction engine 210, prediction data based on the one or more contexts and/or one or more prediction parameters (Step 310). The prediction engine 210 may first receive or generate necessary data, such as the one or more contexts and/or one or more prediction parameters. The one or more contexts may be received from the context analyzer system 208, using a direct communication link 236, or a flow of data within the message bus 204. The one of more contexts may be, for example, an event in the destination/origin airport city, natural disasters diverting the flights, or disruptions in airport which leads to flight diversion resulting in traffic pattern change. The one or more prediction parameters may be, for example, historical data pertaining to weather related anomalies, or historical data airport/airspace restriction related anomalies, infrastructure data for predicting infrastructure requirements for a particular FMS service, or user input directly requesting a prediction based on a particular computation and/or machine learning model. In some implementations, both one or more contexts and one or more prediction parameters may be received at the prediction engine 210, and the one or more contexts may validate data within the one or more prediction parameters. For example, the prediction engine 210 may receive or detect a user input specifying a specific context such as a weather condition, and a specific context received from context analyzer system 208 may validate the user-provided context.

The prediction engine 210 may then determine prediction data. The prediction data may be, for example, one or more FMS microservices (e.g., airport specific services, flight path specific services, services related to fuel scenarios, or services related to optimization scenarios) which may be required for a specific context. The prediction data may also be infrastructure requirements for executing the predicted FMS services for a specific context. Additionally, or alternatively, the prediction data may be anomalies (e.g., invalid conditions) based on historical data, such as weather related anomalies and/or airport/airspace restriction anomalies. Additionally, or alternatively, the prediction data may also include traffic pattern for various contexts (e.g., an event in the destination/origin airport city, natural disasters diverting the flights, or disruptions in airport which leads to flight diversion resulting in traffic pattern change).

The exemplary method 300 of FIG. 3 may additionally comprise determining, using the recommender engine 212, one or more recommendations associated with the one or more FMS services, based on one or more recommendation requests, the one or more contexts, and/or the prediction data (Step 315). The recommender engine 212 may first receive or generate necessary data, such as the one or more recommendation requests, received contexts, and/or one or more prediction data from the prediction engine 210. The one or more recommendation requests may be, for example, a user input requesting a recommendation (e.g., requesting a recommended flight plan for a particular weather, traffic, or terrain data). Additionally, or alternatively, the one or more prediction data and/or one or more contexts may be received from the prediction engine 210 and/or the context analyzer system 208, using the flow of data within the message bus 204. The recommendation engine may respond to such requests and data using pre-stored recommender algorithms or look-up functions.

After collecting the necessary data, the recommender engine 212 may determine one or more recommendations associated with FMS services. For example, the recommender engine 212 may determine one or more aircraft performance options (e.g., cost index calculations for an aircraft) based on one or more scenarios (e.g., traffic patterns or flight paths) provided by the prediction engine 210 and/or the context analyzer system 208. As another example, the recommender engine 212 may recommend different flight plans adapted to various conditions on weather, traffic, and terrain.

The exemplary method 300 of FIG. 3 may additionally comprise identifying, using a background processing system 218, one or more background operations to support an operation of a first FMS service and generating background support data for the first FMS service using the one or more background operations. The first FMS service may be, for example, an FMS microservice predicted by the prediction engine 210 as the FMS microservice which will be required at a certain time in the future based on a specific context. With the first FMS service, the background processing system 218 may identify background operations which may be needed to support the first FMS service. The background operations may, for example, be one or more FMS microservices from the connected FMS microservices 206, other software services accessed by the background processing system 218, or a combination thereof. The background processing system 218 may execute the identified background operations to prepare data for the first FMS service. For example, NOTAM (Notice to Airmen) issues may result in a prediction that FMS microservices of updating a flight plan should be executed. With this prediction, the background processing system 218 may identify tasks of reloading the navigation database and/or connected weather services in order to support the task of the flight plan updating microservice. As another example, based on commercial flight schedules in one or more contexts, and a preset condition that commercial flight schedules do not change frequently, the background processing system 218 may run a flight plan generation service in advance, to have the flight plan ready for a scheduled commercial flight.

Although FIG. 3 shows example blocks of method 300, in some implementations, process 300 may include additional blocks, fewer blocks, different blocks, or differently arranged blocks than those depicted in FIG. 3. Additionally, or alternatively, two or more of the blocks of process 300 may be performed in parallel.

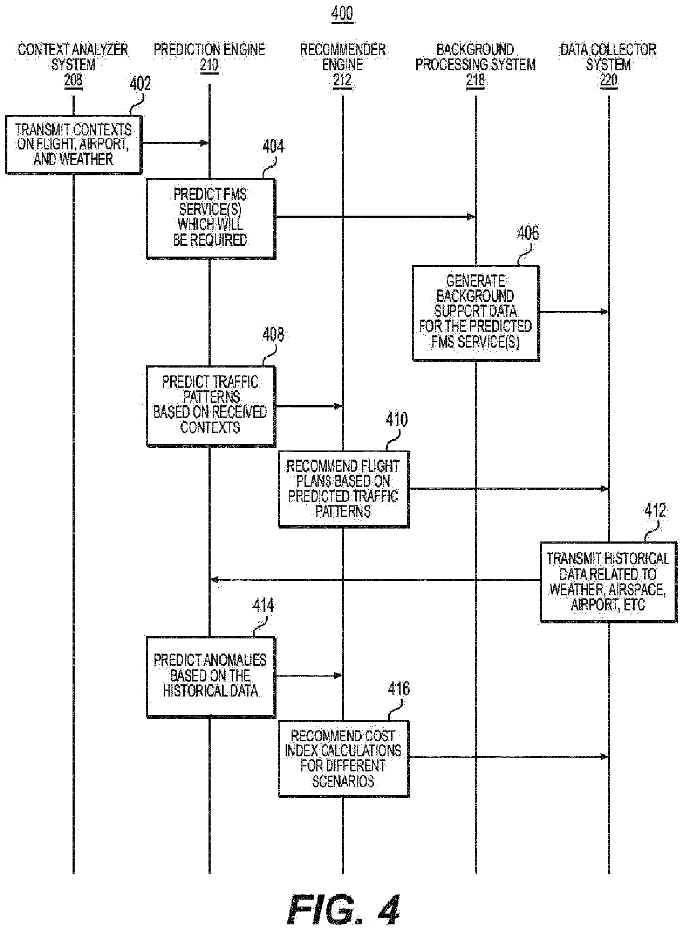

FIG. 4 depicts a communication diagram of example use cases in which the servicing modules are used to predict FMS services, recommend flight plans based on predictions, and recommend cost index calculations based on predictions, according to one or more embodiments. The context analyzer system 208 may transmit contexts on flight, airport, and/or weather (Step 402). With the received contexts, the prediction engine 210 may predict one or more FMS services (e.g., microservices in the connected FMS microservices 206) which may be required to run at the connected FMS cloud services 114 (Step 404). With the one or more predicted FMS services, the background processing system 218 may generate background support data for the one or more predicted FMS services (Step 406). The background support data may be sent to the data collector system 220 for storage and/or further use (Step 406).

Using the contexts on flight, airport, and/or weather from Step 402, the prediction engine 210 may also predict traffic patterns based on the contexts (Step 408). Based on the predicted traffic patterns, the recommender engine 212 may recommend flight plans, and send the recommended flight plans to the data collector system 220 for storage and/or further use (Step 410).

Additionally, or alternatively, the prediction engine may receive historical data (e.g., historical data including information pertaining to weather, airspace, airport, etc.) from the data collector system 220 (Step 412). The receiving of the historical information at the prediction engine 210 may be, for example, based on a request originated from any of the servicing modules, a preprogrammed synchronization, a push from the data collector system 220, etc. Using the received historical data, the prediction engine 210 may predict one or more anomalies (e.g., invalid conditions) related to weather, airport, airspace, etc. (Step 414). Based on the anomalies, the recommender engine 212 may then recommend cost index calculations for different flight scenarios (Step 416).

Although FIG. 4 shows example blocks, in some implementations, process 400 may include additional blocks, fewer blocks, different blocks, or differently arranged blocks than those depicted in FIG. 4. Additionally, or alternatively, two or more of the blocks of process 400 may be performed in parallel.

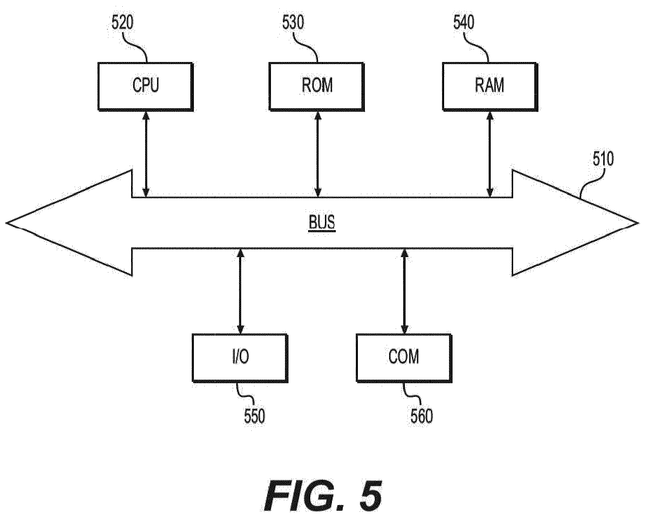

FIG. 5 depicts a high-level functional block diagram of an exemplary computer device or system, in which embodiments of the present disclosure, or portions thereof, may be implemented, e.g., as computer-readable code. In some implementations, the on-board FMS 108, the EFB 110, or dispatcher device 130 (depicted in FIG. 1) may correspond to device 500. Additionally, or alternatively, an API (application programming interface) gateway 202, a message bus 204, servicing modules 208-220 (e.g., context analyzer system, prediction engine, recommender engine, and background processing system), or a host server for connected FMS microservices 206 may each correspond to device 500. Additionally, each of the exemplary computer servers, databases, user interfaces, modules, and methods described above with respect to FIGS. 1-4 can be implemented in device 500 using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGS. 1-4.

If programmable logic is used, such logic may be executed on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device.

For instance, at least one processor device and a memory may be used to implement the above-described embodiments. A processor device may be a single processor or a plurality of processors, or combinations thereof. Processor devices may have one or more processor "cores."

Various embodiments of the present disclosure, as described above in the examples of FIGS. 1-5, may be implemented using device 500. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the spirit of the disclosed subject matter.

As shown in FIG. 5, device 500 may include a central processing unit (CPU) 520. CPU 520 may be any type of processor device including, for example, any type of special purpose or a general-purpose microprocessor device. As will be appreciated by persons skilled in the relevant art, CPU 520 also may be a single processor in a multi-core/multiprocessor system, such system operating alone, or in a cluster of computing devices operating in a cluster or server farm. CPU 520 may be connected to a data communication infrastructure 510, for example, a bus, message queue, network, or multi-core message-passing scheme.

Device 500 also may include a main memory 540, for example, random access memory (RAM), and also may include a secondary memory 530. Secondary memory 530, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 530 may include other similar means for allowing computer programs or other instructions to be loaded into device 600. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 500.

Device 500 also may include a communications interface ("COM") 560. Communications interface 560 allows software and data to be transferred between device 500 and external devices. Communications interface 560 may include a modem, a network interface (such as an Ethernet card), a communications port, a PCMCIA slot and card, or the like. Software and data transferred via communications interface 560 may be in the form of signals, which may be electronic, electromagnetic, optical, or other signals capable of being received by communications interface 560. These signals may be provided to communications interface 560 via a communications path of device 500, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 500 also may include input and output ports 550 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented system for providing one or more flight management system (FMS) services as a Software as a Service (SaaS) with context-aware intelligence for a plurality of FMS users, the computer-implemented system comprising:
a context analyzer system configured to determine one or more contexts based on one or more context analysis parameters, wherein the one or more contexts comprise at least one of a flight context, an airport context, and a weather context;
a prediction engine configured to determine prediction data based on the one or more contexts and/or one or more prediction parameters;
a recommender engine configured to determine one or more recommendations associated with the one or more FMS services, based on one or more recommendation requests, the one or more contexts, and/or the prediction data; and
a background processing system configured to identify one or more background operations to support an operation of a first FMS service and generate background support data for the first FMS service using the one or more background operations; and
a message bus in communication with an API gateway, the context analyzer system, the recommender engine, the prediction engine, and the background processing system.

2. The system of claim 1, further comprising:
a data collector system 220 configured to receive or generate usable data associated with the context analyzer system, the recommender engine, the prediction engine, the background processing system 218, and the data collector system 220; and store the usable data in a data repository for use or retrieval by at least one of the context analyzer system, the recommender engine, the prediction engine, the background processing system 218, and the data collector system 220.

3. The system of claim 1, wherein the one or more context analysis parameters are received from at least one of a cockpit, a ground system, an airport database system, and a connected weather service.

4. The system of claim 1, wherein the one or more prediction parameters are associated with at least one of an airport, a flight path, a fuel scenario, or an optimization scenario, and wherein the prediction engine is configured to determine the prediction data by identifying one or more predicted FMS services.

5. The system of claim 4, wherein the first FMS service is determined based on the identified one or more predicted FMS services.

6. The system of claim 4, wherein the one or more prediction parameters associated with the airport, the flight path, the fuel scenario, and the optimization scenario are determined based on the one or more contexts determined at the context analyzer system.

7. The system of claim 1, wherein the prediction data comprises anomalies identified based on the one or more contexts and/or the one or more prediction parameters.

8. The system of claim 1, wherein the recommender engine being configured to determine one or more recommendations further comprises being configured to determine one or more aircraft performance options based on one or more predicted scenarios, and wherein the one or more predicted scenarios are determined based on at least one of the one of more contexts, the one or more prediction data, and the background support data.

9. A computer-implemented method for providing one or more flight management system (FMS) services as a Software as a Service (SaaS) with context-aware intelligence for a plurality of FMS users, the method comprising:
determining, using a context analyzer system, one or more contexts based on one or more context analysis parameters, wherein the one or more contexts comprise at least one of a flight context, an airport context, and a weather context;
determining, using a prediction engine, prediction data based on the one or more contexts and/or one or more prediction parameters;
determining, using a recommender engine, one or more recommendations associated with the one or more FMS services, based on one or more recommendation requests, the one or more contexts, and/or the prediction data; and
identifying, using a background processing system, one or more background operations to support an operation of a first FMS service and generating background support data for the first FMS service using the one or more background operations,
wherein the context analyzer system, the prediction engine, the recommender engine, and the background processing system are interconnected by a message bus in communication with an API gateway.

10. The method of claim 9, wherein the one or more context analysis parameters are received from at least one of a cockpit, a ground system, an airport database system, and a connected weather service.
